Europäisches Patentamt

European Patent Office

Office européen des brevets

(19)

(11) Numéro de publication: **0 067 756**
**B1**

## (12) FASCICULE DE BREVET EUROPEEN

(45) Date de publication du fascicule du brevet:
14.08.85

(21) Numéro de dépôt: 82400994.8

(22) Date de dépôt: 28.05.82

(51) Int. Cl.⁴: **G 21 C 17/10**, G 01 T 1/12,
G 01 K 1/18

(54) **Dispositif de mesure de puissance locale dans un réacteur nucléaire, à détecteur gamma.**

(30) Priorité: 28.05.81 US 267912

(43) Date de publication de la demande:
22.12.82 Bulletin 82/51

(45) Mention de la délivrance du brevet:
14.08.85 Bulletin 85/33

(84) Etats contractants désignés:
BE DE FR GB IT SE

(56) Documents cités:
FR - A - 2 263 607
FR - A - 2 385 187
FR - A - 2 420 827
FR - A - 2 458 877
US - A - 2 135 078
US - A - 2 156 826

(73) Titulaire: ELECTRICITE DE FRANCE Service National, 2,
rue Louis Murat, F-75008 Paris (FR)

(72) Inventeur: Smith, Robert D., 9211 Bardon Road,
Bethesda Maryland 20014 (US)
Inventeur: Regazzoni, Pierre, 50, rue de la Saucière,
F-92100 Boulogne Billancourt (FR)

(74) Mandataire: Fort, Jacques et al, CABINET
PLASSERAUD 84, rue d'Amsterdam, F-75009 Paris (FR)

**Description**

La présente invention concerne de façon générale le domaine des détecteurs gamma, décrits notamment dans la demande de brevet FR-A-2 420 827.

Les détecteurs gamma utilisés pour mesurer la puissance thermique locale dans les réacteurs nucléaires utilisent l'échauffement d'un corps chauffant, isolé thermiquement, par les rayonnements gamma absorbés. La chaleur anisi créée est proportionnelle à la puissance spécifique dans les crayons de combustible adjacents. Pour mesurer la chaleur dégagée dans le corps chauffant, on la laisse s'écouler vers un puits de chaleur par l'intermédiaire d'un trajet thermique défini, de dimensions maintenues dans des tolérances précises. La chute de température le long de ce trajet est directement proportionnelle au taux de chaleur (Watt/gramme) dans le corps chauffant et donc proportionelle à la puissance dans les crayons de combustible adjacents. Un signal proportionnel à cette puissance est fourni par un thermocouple ou des thermocouples placés de façon à mesurer la chute de température le long du trajet thermique. Cette chute de température et le signal ne sont pas largement affectés par la température du puits de chaleur. Toutefois, lorsque la température du puits de chaleur change de façon considérable, par exemple de 50°C, il y a une modification du second ordre correspondante et appréciable de la conductivité thermique du trajet de chaleur, qui se reflète sous forme de changement de la chute de température et d'erreur dans le signal de sortie, même si le flux gamma est constant.

Le détecteur gamma décrit dans la demande de brevet mentionnée ci-dessus donne des mesures très précises lorsque le passage dans lequel il est inséré est celui d'un tube guide dépourvu de combustible dans un réacteur nucléaire, tube à travers lequel le réfrigérant circule à grande vitesse. Dans une telle installation, la gaine externe du détecteur a une température bien définie. Les indications données par le détecteur gamma sont donc suffisamment précises, ou elles peuvent être corrigées de façon précise pour tenir compte de la variation de second ordre de la conductivité thermique du trajet thermique provoquée par des changements de température de la gaine externe du détecteur gamma, gaine qui constitue puits de chaleur. Mais, lorsqu'on insère un tel détecteur gamma dans un tube sec d'un coeur de réacteur nucléaire, la gaine externe du détecteur peut prendre une température non uniforme, suivant que la partie en cause de la gaine externe touche ou non la paroi du tube. Les parties de la gaine externe qui touchent le tube seront maintenues froides par le contact, tandis que celles qui s'en écartent s'échauffent sous l'action du flux gamma.

Pour résoudre ce problème, le document FR-A-2 458 877 prévoit de munir le détecteur gamma de moyens constituant un pont thermique entre la région froide du corps et le puits de chaleur, capables également de centrer le détecteur gamma dans le tube du coeur ou dans le tube guide où il est inséré.

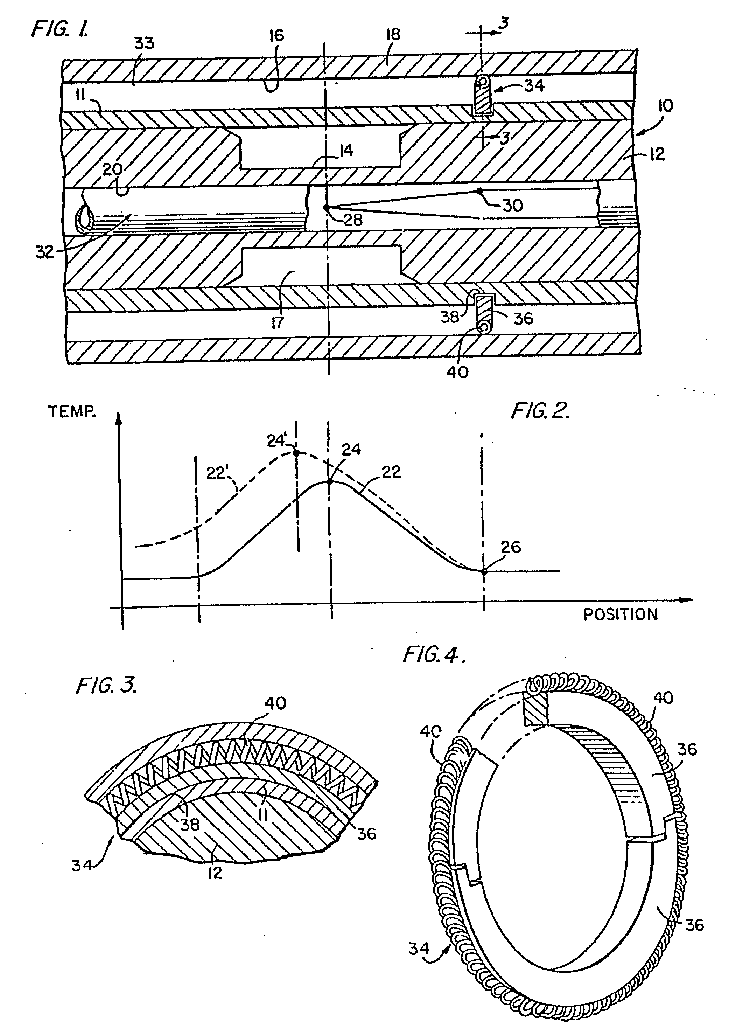

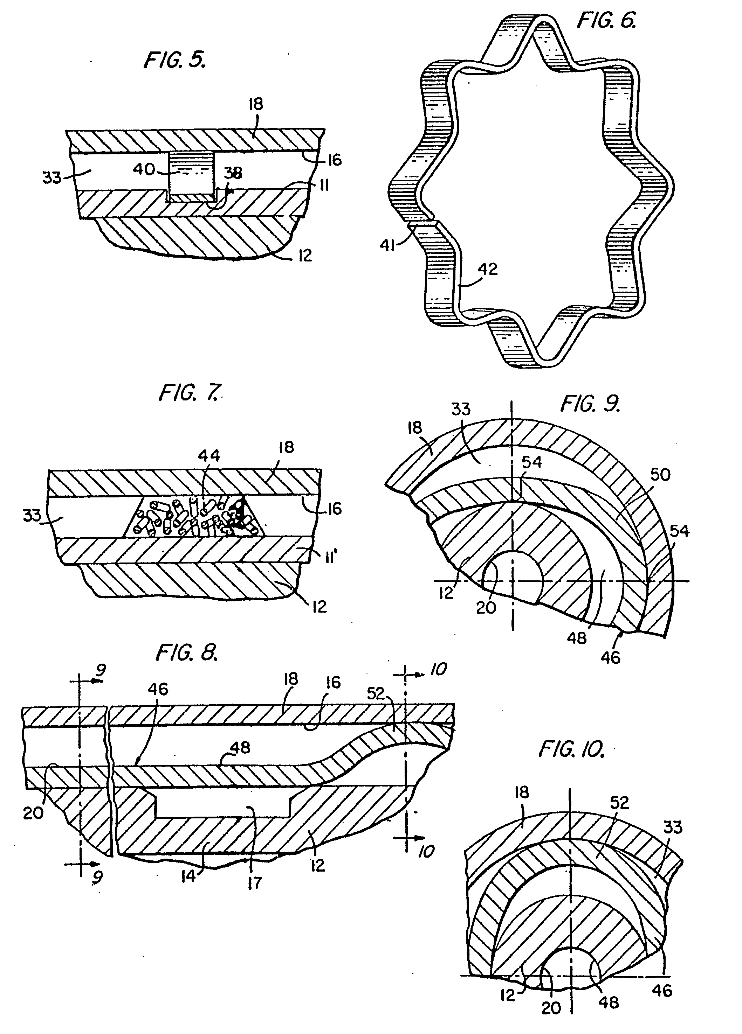

De façon plus précise, ce document décrit un dispositif de mesure de puissance locale dans un réacteur nucléaire comprenant un détecteur gamma placé dans un guide tubulaire d'assemblage de combustible, détecteur ayant un corps allongé chauffé par le rayonnement gamma et présentant des régions chaude et froide l'une par rapport à l'autre ainsi qu'une gaine externe en contact thermique avec le corps le long de la région froide de celui-ci pour réaliser une répartition thermique à symétrie axiale en présence d'un refroidissement externe uniforme de la gaine externe dans un jeu annulaire entre la gaine externe et le guide tubulaire et des moyens constituant centreur et pont thermique pour relier thermiquement la gaine externe et le guide tubulaire placés au même niveau axial que la jonction froide d'un thermocouple de mesure dont la jonction chaude est placée dans la région chaude. Ce pont thermique est placé symétriquement par rapport au plan médian de chaque région froide, courte par rapport aux régions chaudes adjacentes (figures 2-4), ou constitué par des déformations de la gaine au droit des régions chaudes pour constituer un trajet thermique du corps au guide le long de la gaine (figures 5A-5C). Ces solutions particulières ne sont pas toujours entièrement satisfaisantes du point de vue de la suppression des erreurs et/ou de l'obtention d'une efficacité satisfaisante dans les conditions pratiques de fonctionnement.

L'invention vise à fournir un dispositif amélioré du point de vue de l'efficacité dans les conditions réelles d'emploi. Dans ce but, elle propose un dispositif dans lequel la jonction chaude du thermocouple est placée au milieu de la région chaude et le pont thermique est placé axialement au niveau de la région froide du corps, le plus près possible de la frontière d'une région chaude constituée, de façon en elle-même connue, par une partie de diamètre réduit du corps, en un emplacement qui correspond à une partie plate de la courbe de répartition axiale de température, où le centrage local par lesdits moyens évite l'apparition d'une répartition asymétrique de température. Le pont thermique est avantageusement aligné axialement avec la jonction froide d'un thermocouple différentiel associé au détecteur, en un emplacement axial qui coïncide avec une partie plate de la courbe du gradient de température axial. On évite ainsi l'apparition d'un gradient de température asymétrique en réalisant le contact thermique entre la gaine externe et la surface du tube là où il doit se trouver.

Dans un mode particulier de réalisation de l'invention, un dispositif de centrage est constitué par un élément distinct, élastiquement déformable, monté à l'extérieur de la gaine externe du détecteur et en contact avec lui, par exemple dans une gorge annulaire. Cet élément est en contact avec la surface interne du tube du coeur ou du tube guide.

Dans un autre mode de réalisation de l'invention, la gaine externe du détecteur gamma présente une forme circulaire autour des zones froides et une déformation en ellipse pour mettre en contact thermique le corps chauffant et le puits localement dans les zones froides et remplir la fonction de moyens de centrage.

L'invention sera mieux comprise à la lecture de la description qui suit de modes particuliers de réalisation donnés à titre d'exemples non limitatifs. La description se réfère aux dessins qui l'accompagnent, dans lesquels:

la figure 1 est une vue partielle en coupe longitudinale montrant un type de détecteur gamma en place, pouvant être équipé suivant l'invention,

la figure 2 montre des courbes représentatives de la répartition axiale des températures le long d'un détecteur gamma du genre montré en figure 1,

la figure 3 est une vue de détail en coupe transversale suivant le plan 3-3 de la figure 1,

la figure 4 est une vue en perspective du pont thermique et des moyens de centrage associés au détecteur montré en figures 1 et 3,

la figure 5 est une vue de détail en coupe longitudinale d'un détecteur gamma placé dans un tube et ayant un autre type de dispositif de centrage,

la figure 6 est une vue en perspective des moyens constituant pont thermique et centreur dans la figure 5,

la figure 7 est une vue de détail en coupe longitudinale d'un détecteur gamma placé dans un tube à instrument, comportant une variante des moyens formant pont thermique et centreur,

la figure 8 est une vue de détail en coupe longitudinale montrant une autre variante encore,

les figures 9 et 10 sont des vues en coupe transversalement à l'axe, suivant les plans indiqués par les lignes 9-9 et 10-10 sur la figure 8.

Le détecteur gamma 10 montré en figure 1 est du genre décrit dans le document FR-A-2 420 827 mentionné plus haut. Ce détecteur a une gaine externe 11 qui contient un corps chauffant métallique allongé 12 de forme générale cylindrique et de diamètre externe constant, sauf en des portions 14 de diamètre réduit placées en des zones du détecteur écartées dans le sens axial. L'une de ces zones est représentée. Sous l'action du rayonnement gamma ambiant, le corps cylindrique 12 s'échauffe. La chaleur ainsi générée dans la partie de grand diamètre du corps peut s'échapper radialement vers l'extérieur, vers la gaine 11 puis vers l'environnement, tel que le réfrigérant en circulation dans le réacteur ou l'alésage sec d'un tube d'instrumentation 18. Mais la chaleur dissipée dans la portion 14 ne peut s'échapper vers l'extérieur dans le sens radial, car la brèche axiale 17 constitue une résistance thermique. Cette chaleur ne peut donc s'échapper qu'en s'écoulant dans le sens longitudinal le long de la portion 14, puis radialement des deux côtés de la portion 14. La portion 14 constitue donc une région chaude par rapport aux régions froides placées de part et d'autre d'elle dans le sens axial. La répartition de température le long de l'axe du trou 20 ménagé dans le corps 12 a l'allure indiquée par la courbe 22 sur la figure 2 lorsque la gaine est refroidie de façon uniforme à température constante. Les températures du point chaud 24 et d'un point froid 26 sur la courbe 22 sont détectées par un thermocouple différentiel 32 ayant une jonction chaude 28 et une jonction froide 30 (figure 1). Le signal de sortie électrique du thermocouple dépend directement du gradient thermique et il est représentatif du flux gamma.

La gaine 11 est refroidie de façon uniforme et à température déterminée si toute sa surface est en contat avec du réfrigérant en circulation. Mais si le détecteur gamma est introduit dans un tube d'instrumentation sec, certains fractions de la gaine 11 peuvent ponter le jeu annulaire étroit 33 entre la gaine 11 et l'alésage 16 du tube d'instrumentation et fournir un mauvais contact thermique avec le tube d'instrumentation, ce qui fait disparaître la répartition de température symétrique montrée par la courbe 22 sur la figure 2.

Si par exemple une fraction de la gaine 11 a un mauvais contact thermique avec le tube 18, la courbe de température suivant l'axe du détecteur gamma (pour un flux gamma inchangé) devient celle montrée par la ligne en tirets 22' sur la figure 2. On voit sur la courbe 22' que la crête 24' n'est plus alignée avec la jonction chaude 28 de sorte que le signal de sortie de température différentielle fourni par le thermocouple est erroné. Pour éviter cette erreur, on évite que ne s'établisse un contact thermique défectueux entre la gaine et le tube d'instrumentation en plaçant un dispositif de centrage 34 dans chaque zone de mesure, comme le montre la figure 1.

Le dispositif de centrage 34 montré en figures 3 et 4 comporte deux tronçons d'anneau fendu 36 placés dans une gorge annulaire de montage 38 ménagée dans la gaine 11. Les deux tronçons étant séparables, on peut les insérer dans la gorge de façon qu'ils soient en contact l'un avec l'autre. Un ressort 40 constitué par une hélice dont les extrémités sont accrochées, l'une à l'autre est tendu dans une gorge circonférentielle ménagée sur le bord externe des tronçons 36. La tension du ressort 40 maintient en place les tronçons. L'élasticité des spires individuelles du ressort 40 leur permet de s'adapter à la forme et au diamètre de l'alésage 16 en dépit des tolérances. Les spires du ressort 40 s'appuyant fortement contre les tronçons d'anneau et contre l'alésage 16, elles réduisent considérablement la résistance thermique entre la gaine 11 et l'alésage par comparaison à celle qui existe entre un alésage et une gaine placée dans l'alésage avec un jeu. Si, de plus, l'alésage est humide, le dispositif de centrage ne gêne pas notablement l'écoulement du réfrigérant du réacteur le long de l'alésage, car le réfrigérant peut passer le long de l'alésage entre des spires successives du ressort en hélice 40.

Chaque dispositif de centrage est maintenu par la gorge de montage 38 en un emplacement aussi proche que possible de la brèche 17, mais à une distance de cette brèche suffisante pour correspondre toutefois à une partie plate de la répartition de température axiale, montré au point 26 sur la courbe 22. Ce dispositif peut être aligné avec la jonction froide 30 du thermocouple. En plaçant ainsi le dispositif de centrage, on évite de porter atteinte à la symétrie de la courbe 22 à la suite d'un mauvais contact thermique entre la gaine 11 et le tube 18.

Les figures 5 et 6 montrent une variante de l'invention dans laquelle un dispositif de centrage sous forme d'un ressort à ruban 42 se verrouille élastiquement dans la gorge 38 de la gaine 11. Le ressort à ruban 42 comporte une fente 41 permettant de l'ouvrir pour le faire passer sur la partie de grand diamètre de la gaine 11. Le détecteur gamma de la figure 5 est, pour le reste, similaire à celui de la figure 1. Bien que le ressort 42 constitue un pont thermique ayant une résistance thermique plus élevée que celle du dispositif de centrage 34, il est satisfaisant dans de nombreux cas et il est plus simple à construire. Le ressort à ruban 42 ne gêne pas l'écoulement longitudinal du réfrigérant du réacteur.

Dans la variante illustrée en figure 7, le pont thermique est constitué d'une masse élastique 44 formée par une toile tubulaire tissée en fil fin d'acier inoxydable. Le tube tissé ou tricoté est comprimé à 30% de son poids spécifique, pour former une chemise spongieuse similaire à celle utilisée pour déshumidifier les gaz comprimés. La chemise spongieuse est glissée sur la gaine 11' du détecteur gamma, puis soudée en place. La masse élastique 44 diminue la résistance thermique entre la gaine 11' et l'alésage 16 et permet au réfrigérant de s'écouler longitudinalement. La variante de la figure 4 présente l'avantage que le pont thermique est fixé au détecteur gamma.

Les figures 8, 9 et 10 montrent une autre variante qui assure un bon contact thermique entre une gaine, désignée dans son ensemble par la référence 46, et l'alésage 16 en même temps qu'elle garantit un bon centrage de la gaine dans l'alésage et permet l'écoulement longitudinal du réfrigérant.

Comme dans les autres modes de réalisation, la gaine 46 est en contact avec les régions froides du corps chauffant de façon à les refroidir. Dans les portions 48 de la gaine 46 qui contiennent les brèches 17, la gaine est cylindrique. Dans les portions 50 et 52 qui les encadrent, elle est déformée en élipsoïde en contact avec le tube 18 suivant le grand axe. La gaine 46 est déformée dans des directions perpendiculaires à des emplacements alternés dans le sens axial.

Par suite de l'ajustage coulissant de la gaine et de l'alésage 16, on obtient un bon contact thermique. En même temps, les brèches de résistance thermique 17 sont contenues dans la gaine 46 qui maintient leur isolement. On obtient un bon contact aux points 54 le long du grand axe et du petit axe (figure 9) où la gaine s'appuie sur l'alésage et sur le corps chauffant pour assurer un meilleur centrage. Sauf dans les portions renflées 50 et 52, la gaine 46 est cylindrique et en contact thermique avec les régions froides. On voit que le pont thermique fourni par ce mode de réalisation est robuste.

Les ponts thermiques et les moyens de centrage décrits sont utilisables non seulement en combinaison avec des détecteurs gamma fixés à leur place d'utilisation, mais aussi avec des thermomètres gamma mobiles utilisés notamment pour des explorations.

**Revendications**

1. Dispositif de mesure de puissance locale dans un réacteur nucléaire, comprenant un détecteur gamma (10) placé dans un guide tubulaire (18) d'assemblage de combustible, détecteur ayant un corps allongé (12) chauffé par le rayonnement gamma et présentant des régions chaude et froide l'un par rapport à l'autre, une gaine externe (11 ou 46) en contact thermique avec le corps (12) le long de la région froide pour réaliser une répartition de température à symétrie axiale en cas de refroidissement externe uniforme de la gaine externe dans un jeu annulaire (33) entre la gaine externe (11 ou 46) et le guide tubulaire (18), et des moyens constituant un centreur et un pont thermique (36, 40; 42; 44; 52) qui relie thermiquement la gaine externe et le guide tubulaire au même niveau axial que la jonction froide (30) d'un thermocouple de mesure dont la jonction chaude est placée dans la région chaude, caractérisé en ce que la jonction chaude du thermocouple est placée au milieu de la région chaude et en ce que le pont thermique est placé axialement au niveau de la région froide du corps (12), le plus près possible de la frontière d'une région chaude (14) constituée, de façon en elle-même connue, par une partie de diamètre réduit du corps, en un emplacement qui correspond cependant à une partie plate de la courbe de répartition axiale de température, où le centrage local par lesdits moyens évite l'apparition d'une répartition asymétrique de température.

2. Dispositif suivant la revendication 1, caractérisé en ce que les moyens constituant pont thermique comportent un élément de centrage en contact de glissement avec le guide tubulaire (18).

3. Dispositif suivant la revendication 2, caractérisé en ce que les moyens constituant pont thermique comprennent un anneau fendu en deux tronçons (36) au moins, portant l'élément de centrage (40, 42).

4. Dispositif suivant la revendication 2 ou 3, caractérisé en ce que l'élément de centrage est un ressort hélicoïdal (40).

5. Dispositif suivant la revendication 2, 3 ou 4, caractérisé en ce que l'élément de centrage ou les tronçons d'anneau (36) sont placés dans une gorge annulaire (38) de la gaine (11).

6. Dispositif suivant la revendication 3, caractérisé en ce que l'élément de centrage est constitué par un ressort à ruban (42) fendu et ondulé, placé dans une gorge (38) de la gaine externe.

7. Dispositif suivant la revendication 1, 2 ou 3, caractérisé en ce que les moyens formant pont thermique sont constitués par les portions (50, 52) de la gaine externe (46) déformées dans le sens radial pour avoir une allure ellipsoïdale et être en contact avec le corps (12) et le guide (18), en des zones adjacentes de la région chaude du corps, mais à distance de celle-ci, la gaine restant cylindrique au droit de la zone chaude.

**Claims**

1. Device for measuring the local power in a nuclear reactor, comprising a gamma sensor (10) positioned within a tubular guide (18) of a fuel assembly, said sensor having an elongated gamma heated body (12) provided with relatively hot and cold regions, an outer sheath (11 or 46) in thermal contact with the body (12) along the cold region to establish symmetrical heat distribution in response to uniform external cooling of the outer sheath within an annular gap (33) between said outer sheath (11 or 46) and the tubular guide, and means constituting centering means and a thermal bridge (36, 40; 42; 44; 52) which thermally connects the outer sheath and the tubular guide at the same axial level as the cold junction (30) of a measuring thermocouple whose hot junction is located in the hot region, characterized in that the hot junction of the thermocouple is located midway in the hot region and in that the thermal bridge is located at the axial level of the cold region of the body (12), as close as possible to the boundary with a hot region (14) which is constituted, in a known per se manner, by a part of reduced diameter of the body, at a location which however corresponds to a flat portion of the axial temperature distribution curve, wherein local centering by said means prevents occurence of an unsymmetrical temperature distribution.

2. Device according to claim 1, characterized in that said thermal bridge means comprises a centering element in sliding contact with the tubular guide (18).

3. Device according to claim 2, characterized in that said thermal bridge means includes a ring split into at least two separable ring sections (36) on which the centering element (40, 42) is supported.

4. Device according to claim 2 or 3, characterized in that the centering element is a helical spring (40).

5. Device according to claim 2, 3 or 4, characterized in that the centering element or the ring sections (36) are located in an annular groove (38) formed in the sheath (11).

6. Device according to claim 3, characterized in that the centering element is a split, undulating ribbon spring (42) seated in a groove (38) of the outer sheath.

7. Device according to claim 1, 2 or 3, characterized in that the thermal bridge means are formed by portions (50, 52) of the outer sheath (46) radially deformed into ellipsoidal shape to be in contact with the body (12) and the guide (18) in zones which are adjacent to the hot region of the body, but at a distance from the latter, said sheath remaining cylindrical at the level of the hot zone.

**Patentansprüche**

1. Vorrichtung zum Messen der lokalen Leistung in einem Kernreaktor, mit einem Gammastrahlendetektor (10), der in einem Führungsrohr (18) einer Brennstoffanordnung angeordnet ist und einen langgestreckten Körper (12) aufweist, der durch Gammastrahlen erwärmt wird und im Vergleich zu einander warme und kühle Bereiche aufweist, mit einer äusseren Hülse (11 oder 46), die längs des kühlen Bereiches mit dem Körper (12) in thermischem Kontakt steht, um eine axial symmetrische Temperaturverteilung im Falle einer gleichmässigen äusseren Abkühlung der äusseren Hülse in einem ringförmigen Spielraum (33) zwischen der äusseren Hülse (11 oder 46) und dem Führungsrohr (18) zu bewirken, und mit Mitteln, die eine Zentrierung und eine thermische Brücke (36, 40; 42; 44; 52) bilden, die die äussere Hülse und das Führungsrohr auf gleichem axialen Niveau wie die kalte Verbindungsstelle (30) eines Mess-Thermoelements, dessen warme Verbindungsstelle in dem warmen Bereich angeordnet ist, thermisch verbindet, dadurch gekennzeichnet, dass die warme Verbindungsstelle des Thermoelements inmitten des warmen Bereiches angeordnet ist und dass die thermische Brücke axial in Höhe des kalten Bereiches des Körpers (12) angeordnet ist, und zwar so nahe wie möglich an der Grenze eines warmen Bereiches (14), der in an sich bekannter Weise durch einen einen verringerten Durchmesser aufweisenden Teil des Körpers gebildet ist, an einer Stelle, die jedoch einem ebenen Teil der Kurve der axialen Temperaturverteilung entspricht, wo die örtliche Zentrierung durch die erwähnten Mittel das Auftreten einer asymmetrischen Temperaturverteilung verhindert.

2. Vorrichtung nach Anspruch 1, dadurch gekennzeichnet, dass die die thermische Brücke bildenden Mittel ein mit dem Führungsrohr (18) in gleitender Berührung stehendes Zentrierelement aufweisen.

3. Vorrichtung nach Anspruch 2, dadurch gekennzeichnet, dass die die thermische Brücke bildenden Mittel einen unterbrochenen Ring aus mindestens zwei das Zentrierelement (40, 42) tragenden Segmenten (38) aufweist.

4. Vorrichtung nach Anspruch 2 oder 3, dadurch gekennzeichnet, dass das Zentrierelement eine Schraubenfeder (40) ist.

5. Vorrichtung nach Anspruch 2, 3 oder 4, dadurch gekennzeichnet, dass das Zentrierelement oder die Ringsegmente (36) in einer Ringnut (38) der Hülse (11) angeordnet sind.

6. Vorrichtung nach Anspruch 3, dadurch gekennzeichnet, dass das Zentrierelement aus einem unterbrochenen und gewellten Federband (42) gebildet ist, das in einer Nut (38) der äusseren Hülse angeordnet ist.

7. Vorrichtung nach Anspruch 1, 2 oder 3, dadurch gekennzeichnet, dass die die thermische Brücke bildenden Mittel durch Teile (50, 52) der äusseren Hülse (46) gebildet sind, die in radialer Richtung so verformt sind, dass sie einen elliptischen Verlauf haben und mit dem Körper (12) und dem Führungsrohr (18) in benachbarten Zonen des warmen Körperbereiches, jedoch in einem Abstand von diesem, in Berührung stehen, wobei die Hülse in der Nähe der warmen Zone zylindrisch bleibt.

FIG. I.

FIG. 2.

TEMP.

POSITION

FIG. 3.

FIG. 4.

FIG. 5.

FIG. 6.

FIG. 7.

FIG. 8.

FIG. 9.

FIG. 10.